# EUROPEAN PATENT SPECIFICATION

(11) **EP 2 155 348 B1**
(45) Date of publication and mention of the grant of the patent: **17.07.2013**
(21) Application number: 08760303.1
(22) Date of filing: 30.05.2008
(51) Int. Cl.: B01D 15/20, B01J 20/32, B01J 20/34

(54) **PROCESS FOR RE-COATING OF A SILICA GEL MATERIAL**
VERFAHREN ZUR WIEDERBESCHICHTUNG EINES MATERIALS AUS KIESELSÄUREGEL
PROCÉDÉ DE RÉENDUCTION D'UN MATÉRIAU DE TYPE GEL DE SILICE

(30) Priority: 31.05.2007 EP 07109312; 31.05.2007 US 941247 P
(43) Date of publication of application: 24.02.2010
(73) Proprietor: Novo Nordisk A/S, 2880 Bagsværd (DK)
(72) Inventor: LARSEN, Per, DK-2840 Holte (DK); SCHOU, Ole, DK-4773 Stensved (DK); DAMTOFT, Søren, DK-4681 Herfølge (DK); HOWELLS, Lotte Boe, DK-4622 Havdrup (DK)
(74) Representative: Noergaard, Torsten
(86) International application number: PCT/EP2008/056716
(87) International publication number: WO 2008/145743

(56) References cited:
- FR-A- 748 584
- US-A1- 2003 106 840
- US-B1- 6 248 683
- ZHOU F L ET AL: "DOUBLE-COATED SILICA SUPPORTS FOR HIGH-PERFORMANCE AFFINITY CHROMATOGRAPHY OF PROTEINS" JOURNAL OF CHROMATOGRAPHY, ELSEVIER SCIENCE PUBLISHERS B.V. AMSTERDAM, NL, vol. 510, no. 1, 27 June 1990 (1990-06-27), pages 71-81, XP000133539 ISSN: 0021-9673
- MAJORS R E: "The Cleaning and Regeneration of Reversed-Phase HPLC columns" LC GC NORTH AMERICA, ADVANSTAR COMMUNICATIONS, DULUTH, MN, US, vol. 21, no. 1, January 2003 (2003-01), pages 19-26, XP002293699 ISSN: 1527-5949

## Description

### FIELD OF THE INVENTION

The present invention relates to a process for re-coating of a silica gel material with a coating, especially re-coating of an already used or spent coated silica gel material.

### BACKGROUND OF THE INVENTION

Coated silica gel for chromatography and/or adsorption processes is a universal material in the pharmaceutical industry, for organic synthesis, etc., and perhaps one of the most frequently applied. Accordingly, huge quantities of spent coated silica gel are generated yearly by laboratories in universities, research centres, and in industrial production processes.

Silica gels used for liquid chromatographic purposes such as RP-HPLC (reversed phase HPLC) are mostly functionalised with a coating of different types of ligands (i.e. bonded phases). After having been in use for a while, the coated phase is no longer capable of performing the required separation and/or adsorption. This may be due to several reasons. The silica gel may have lost some of the ligands and therefore no longer has the same bonding capabilities, the pores in the silica gel particles may have been filled with product or impurities during use or impurities may have been irreversible adsorped to the coated phase. The used material is therefore discarded and a new coated material is taken into use. Coated silica gel is normally very expensive.

RP-HPLC consists of a non-polar stationary phase and a moderately polar mobile phase. One common stationary phase is silica which has been treated with RMe₂SiCl, where R is a straight chain alkyl group such as C₁₈H₃₇ or C₈H₁₇, Normal phase HPLC consists of a polar stationary phase and non-polar mobile phases. One common stationary normal HPLC phase is silica gel but also silica gel coated with polar ligands such as 1,2-dihydroxypropyl dimethyl silyl are regularly used. Coated silica gel can also be used for ion exchange chromatography. Here the ligands typically contain weak or strong acid or base characteristics such as sulfopropyl and quaternary ammonium groups.

Zhou, F. L. et al ("Double-coated silica supports for high-performance affinity chromatography of proteins", Journal of Chromatography, vol. 510, no. 1, 27. June 1990, pages 71-81) describes double-coating of silica beads to obtain silica gel with a double layer of polysaccharide for high-performance affinity chromatography of proteins. W02004050926 describes a process for the recovery of palladium from silica which is used as an absorbent in column chromatography or as a catalyst support in catalysts. WO0061493 describes regeneration of a particulate material, e.g. silica, silica gel, alumina, silicate materials, clays, sand and the like, by a process comprising (a) contacting the material with an extractant of organic compounds for a period of time sufficient to dissolve the organic compounds, carrying out a solid-liquid separation, and heating to remove all extractant from the particulate matter; (b) contacting the material obtained from step (a) with an oxidizing agent, and optionally carrying out a solid-liquid separation; (c) contacting the material from step (b) with an acidic solution to extract inorganic compounds, metals and metal salts, and carrying out a solid-liquid separation; (d) heating the material obtained from step (c) to a temperature sufficiently high to evaporate water and combust carbon-containing compounds; and (e) recovering regenerated material. EP-A-0 611 071 describes a process for regenerating and optionally carbonizing spent acid-activated smectite clays. US2003/106840 describes a process for regenerating spent silica gel by heating to recover its sulphur-absorption capacity. DE 16 45 834 A describes the regeneration of fullers earth from scrap oil. None of these references describe the re-coating of a coated silica gel material e.g. after use in liquid chromatography or adsorption processes. JP61167864A describes on-line silanization of e.g. RP-HPLC columns by treating silica gel packed in a column with a silane compound. Regeneration of a deteriorated chemically bound silica gel column can be carried out by the technique. Even though this process partly re-coats a silica gel based HPLC column, the process does not, for instance, solve the problem of removing irreversible adsorped compounds. WO2004089504 describes the regeneration of stationary phases (coated material) with organic acids. Majors, R. E. describes ("The Cleaning and Regeneration of Reversed-Phase HPLC Columns" LG GC North America, Advanstar Communications, Duluth, MN, US, vol. 21, no. 1, January 2003,) special techniques for cleaning bonded-silica reversed-phase columns by different solvents. A number of other references exist which describe similar ways of regenerating chromatographic columns by passing different types of solvents through the column for removal of unwanted material. However, none of these processes solve the problem of regaining the full or an acceptable separation and/or adsorption capacity due to loss or partly loss of coating.

Thus, there is a need for a process for re-coating of coated silica gel where e.g. irreversibly bound organic material or salts are removed, such as after use, without degradation of the original silica gel in order to avoid discarding large amounts of used silica gel material for environmental reasons and to improve the economy in industrial processes.

### SUMMARY OF THE INVENTION

The present invention relates to a process for re-coating of a silica gel material with a coating, especially re-coating of an already used or spent coated silica gel material.

The invention relates to a process for the preparation of a re-coated silica gel material from a silica gel material coated with a first coating comprising the steps of:
a) heating the silica gel material coated with a first coating,
b) treating the material obtained in step a) with an acidic solution, and
c) coating the material obtained in step b) with a second coating, is provided.

The second coating can be, but is not limited to, the same coating as the first coating.

### FIGURES

Fig. 1 shows the flowchart for the preparation of "Gel 1R" according to the invention and gel "Gel 1N" for comparison as described in example 1.

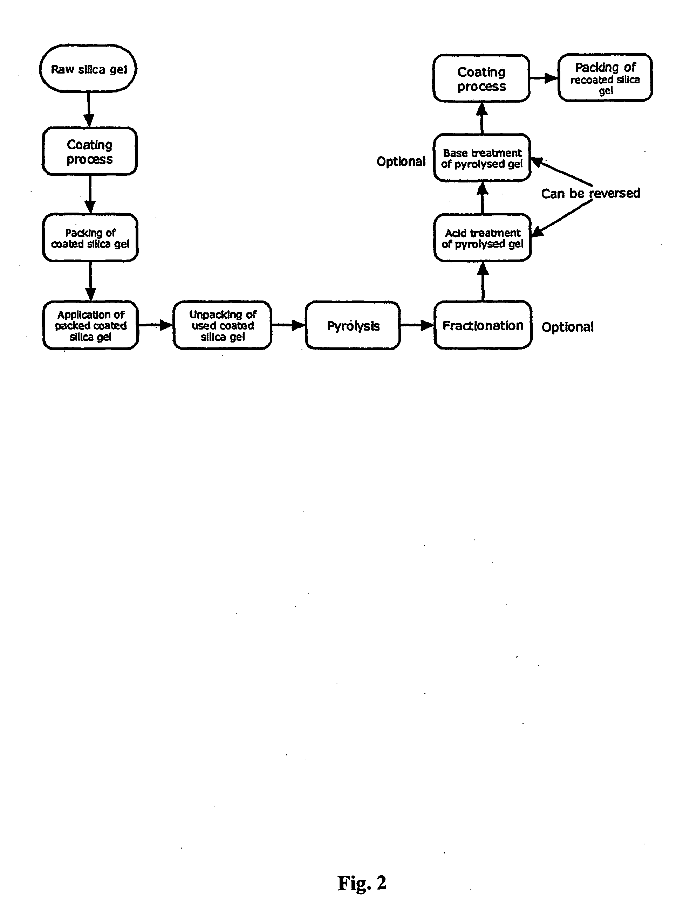

Fig. 2 shows the flowchart of an example of an overall process of packing and using a coated silica gel and thereafter obtaining a re-coated silica gel according to the invention.
Fig. 3 shows the introduction of a new silicium layer when re-coating a silanized silica gel. In the figure, A symbolises raw silica gel, B symbolises a silanized coated silica gel, and C symbolises a re-coated silanized silica gel.
Fig. 4 shows the chromatographic separation performance of a silica gel silanized with (3,3-dimethyl)butyl dimethylchloro silane as described in example 1.
Fig. 5 shows the chromatographic separation performance of the same silica gel silanized with (3,3-dimethyl)butyl dimethylchloro silane as shown in fig. 1, but after having been in use as described in example 1.
Fig. 6 shows the chromatographic separation performance of the re-coated silica gel "Gel 1R" treated according to the invention as described in example 1.
Fig. 7 shows the chromatographic separation performance of a re-coated silica gel "Gel 1N" which has not been treated according to the invention as described in example 1.
Fig. 8 shows the chromatographic separation performance of a C4, 300Å silica gel (sample 7.0) as described in example 7.
Fig. 9 shows the chromatographic separation performance of a re-coated C18, 300Å silica gel (sample 7.3) as described in example 7.
Fig. 10 shows the chromatographic separation performance of a C18, 100Å silica gel (sample 8.0) as described in example 8.
Fig. 11 shows the chromatographic separation performance of a re-coated C18, 100Å silica gel (sample 8.3) as described in example 8.
Fig. 12 shows the chromatographic performance of a silica based anion exchanger as described in example 6.
Fig. 13 shows the chromatographic performance of a re-coated silica-based anion exchanger as described in example 6.

### DETAILED DESCRIPTION OF THE INVENTION

The present invention relates in one aspect to a process for re-coating of a particulate coated silica gel material, especially a coated silica gel material which has been in use and therefore has a lower separation performance and/or adsorption capacity compared to the coated silica gel material before use.

In one aspect of the invention, a process for the preparation of a re-coated silica gel material from a silica gel material coated with a first coating comprising the steps of:
a) heating the silica gel material coated with a first coating at a temperature from 50 °C to 1000 °C,
b) treating the material obtained in step a) with an acidic solution having a pH lower than 5, and
c) coating the material obtained in step b) with a second coating, is provided.

Silica gel, a dioxide of the element silicon, is an amorphous, highly porous, partially hydrated form of silica. Silicium dioxide occurs naturally as sand but, as such, is not sufficiently porous for chromatographic use and so the silica gel used in chromatography may be prepared either synthetically or by modification of sand. Crystalline silica is, in fact, the anhydride of silicic acid and silica gel is a polymeric form of silicic acid. Silica gel is one of the more important substances used in liquid chromatography: it is not only used as a polar stationary phase per se, but is also the basic material from which most of the coated phases are prepared. Silica gel may be prepared as either irregular or spherical particles. Spherical silica gel is the most used form of silica gel in liquid chromatography.

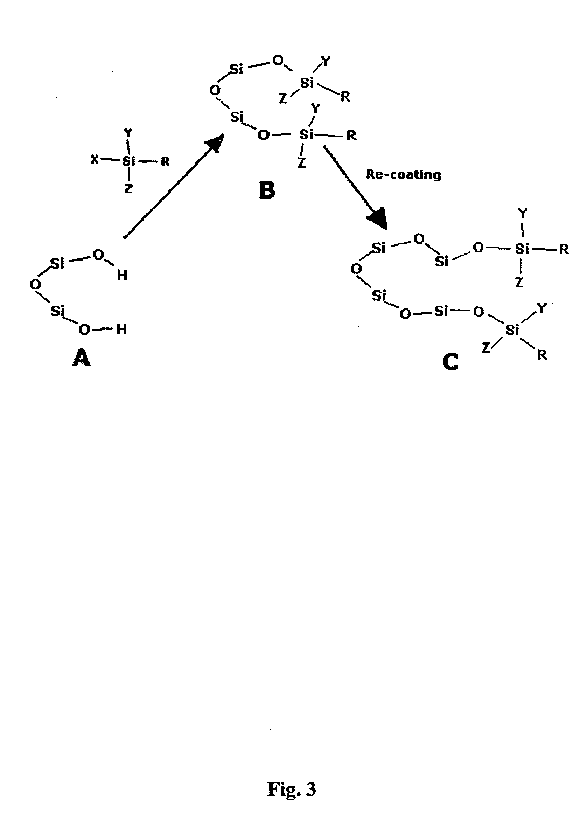

The matrix of the *primary* silica gel particle consists of a core of silicon atoms joined together with oxygen atoms by siloxane bonds (silicon-oxygen-silicon bonds). On the surface of each primary particle, some residual, uncondensed hydroxyl groups from the original polymeric silicic acid remain (called silanols). These residual hydroxyl groups confer upon silica gel its polar properties. These hydroxyl groups may react with silane reagents to form bonded phases as shown in fig. 3 (as e.g. described by K.K. Unger in "Porous Silica - Its properties and Use as Support in Column Liquid Chromatography", Elsevier, 1979). The silica surface is quite complex and contains more than one type of hydroxyl groups, and adsorbed water. There are three types of hydroxyl groups or silanols: isolated, vicinal, and geminal, and these silanols are the dominant adsorption and derivatization (coating) sites.

Examples of raw silica gel material to which a first coating has been applied and which may be re-coated in the process according to the invention is porous silica gel material having a mean particle size of 1 to 1000 µm, and preferably 1 to 200 µm. In one aspect of the invention, the silica gel material has a pore size of 1 to 10.000 Å, and preferably 50 to 5000 Å. In a further aspect of the invention, the silica gel material has a pore size of 1 to 2000 Å. In a further aspect of the invention, the silica gel material has a pore size of 1 to 1000 Å. In a further aspect of the invention, the silica gel material has a surface area of 1 to 1000 m²/g, and preferably 5 to 600 m²/g. In one aspect of the invention, the silica gel has a pore volume of 0.2 to 2.0 ml/g. In a further aspect, the pore volume is between 0.5 and 1.5 ml/g, and in yet a further aspect between 0.7 and 1.2 ml/g. In another aspect of the invention, the silica gel material is in the form of spherical silica gel particles.

Preferred examples of raw silica gel materials are irregular silica gels with pore sizes of e.g. 60Å, 100Å, 200Å, 300Å, 400Å, 500Å, 600Å, 700Å, 800Å, 900Å, 1000Å, 1300Å, 1500Å, 1700Å or 2000Å. In another aspect, the particles are spherical silica gel particles with a mean particle sizes of e.g. sub 2 µm, 2 µm, 5 µm, 10 µm, 15 µm, 20 µm, 25 µm, 30 µm or 50 µm, and pore sizes of e.g. 60Å, 100Å, 200Å, 300Å, 400Å, 500Å, 600Å, 700Å, 800Å, 900Å, 1000Å, 1300Å, 1500Å, 1700Å or 2000Å.

"Treating" or "treatment," used in connection with treating or treatment of a silica gel material with an acidic solution, with a neutral solution such as water or an alkaline solution in the present context may be performed by simple contact with a liquid or a gas under normal or supercritical conditions. In one embodiment, the material is contacted by stirring the silica gel material such as the pyrolysed silica gel in an aqueous solution.

By the term "silica gel material coated with a first coating" or "coated silica gel material" is meant a coated material having as a main part amorphous silicium dioxide. In one aspect of the invention, the coating consists mainly of organic material. The silica gel material may be further functionalised with one or more types of ligands or coatings. This definition does not exclude the possibility that the silica gel material coated with a first coating has already been re-coated before. Thus, it is possible by the process according to the invention to re-coat a coated silica gel material several times (as e.g. shown in example 7 and 8). The silica gel material coated with a first coating is, thus, in one aspect an already at least once re-coated material.

In one aspect of the invention, the second coating is the same type of coating as the first coating. In another aspect of the invention, the second coating is another type of coating than the first coating.

In a further aspect of the invention, the silica gel material coated with a first coating is a silanized silica gel. In another aspect of the invention, the silica gel material obtained in step c) with a second coating is a silanized silica gel.

In one aspect of the invention, the silica gel material with the first coating has been in use.

The silica gel material with the first coating can be used for chromatography such as RP-HPLC, normal phase HPLC, HIC, SFC, affinity chromatograhpy, chiral separation, and IEX chromatography, and other adsorption processes such as SPE (Solid Phase Extraction). The silica gel material with the first coating can be used for liquid chromatography, such as HPLC. The silica gel material with the first coating can be used for liquid chromatography of organic compounds. The silica gel material with the first coating can be used for liquid chromatography of pharmaceutical compounds such as pharmaceutical peptides or small drugs. The silica gel material with the first coating may have lost some of or all of its chromatographic separation and/or adsorption capability.

The re-coated silica gel material is a material which may be used for chromatography such as RP-HPLC, normal phase HPLC, HIC, SFC, affinity chromatograhpy, chiral separation, and IEX chromatography, and other adsorption processes such as SPE (Solid Phase Extraction). The re-coated silica gel material is suitable for liquid chromatography such as HPLC and adsorption processes. material is a re-coated silica gel material suitable for use in RP-HPLC. The re-coated silica gel material is suitable for liquid chromatography of pharmaceutical compounds such as pharmaceutical peptides or small drugs.

As mentioned above, the re-coated silica gel and/or the silica gel material coated with a first coating may be a silanized silica gel. The silanized silica gel is a silica gel which has been chemically modified (or derivatized) with a silane compound. In a further aspect, the silanized silica gel is a silica gel which has been chemically modified with a silane compound represented by the general formula [1]: 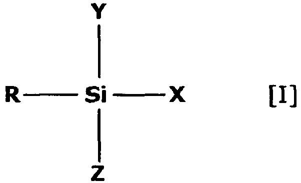 wherein R is selected from the group consisting of an alkyl and aryl group where the alkyl or aryl group optionally can have one or more substituent(s), X is selected from the group consisting of a hydrogen atom, a halogen atom, a triflate group and an C₁₋₄-alkoxy group , and Z and Y can be either the same or different, and represent either an alkyl or aryl group where the alkyl or aryl group optionally can have one or more substituent(s) or represent a hydrogen atom, a halogen atom, a triflate, or an C₁₋₄-alkoxy group. In one aspect of the invention, R is "C₁₋₃₀-alkyl". In a further aspect of the invention, X is selected from the group consisting of a hydrogen atom, a chlorine atom, a triflate group and an C₁₋₄-alkoxy group. In one aspect of the invention, Z and Y can be either the same or different, and represent "C₁₋₁₀-alkyl". In a further aspect, X and Y are the same and are either a halogen atom, such as chlorine, or an alkoxy group such as methoxy or ethoxy. In another aspect, R and Z are the same and are "C₁₋₃₀-alkyl". In another aspect, R is "C₁₋₃₀-alkyl" and Z, Y and X are the same and are either a halogen atom or an alkoxy group such as an C₁₋₄-alkoxy group. Typically, X is replaced by the bond to an oxygen atom in the silica gel as shown in fig. 3.

In one aspect of the invention, alkyl is "C₁₋₁₀₀-alkyl". The term "C₁₋₁₀₀-alkyl" as used herein represents a saturated, branched or straight hydrocarbon group having from 1 to 100 carbon atoms, e.g. C₁₋₃-alkyl, C₁₋₄-alkyl, C₁₋₆-alkyl, C₂₋₆-alkyl, C₃₋₆-alkyl, C₁₋₈-alkyl, C₁₋₁₀-alkyl, C₃₋₁₂-alkyl, C₆₋₁₂-alkyl, and the like. Representative examples are methyl, ethyl, propyl (e.g. prop-1-yl, prop-2-yl (or *iso*-propyl)), butyl (e.g. 2-methylprop-2-yl (or *tert*-butyl), but-1-yl, but-2-yl), pentyl (e.g. pent-1-yl, pent-2-yl, pent-3-yl), 2-methylbut-1-yl, 3-methylbut-1-yl, hexyl (e.g. hex-1-yl), heptyl (e.g. hept-1-yl), octyl (e.g. oct-1-yl), nonyl (e.g. non-1-yl), and the like. In one aspect of the invention, alkyl is "C₁₋₁₀₀-alkyl". In one aspect of the invention, alkyl is "C₁₋₅₀-alkyl". In a further aspect of the invention, alkyl is "C₁₋₃₀-alkyl".

The term "aryl" as used herein is intended to include monocyclic, bicyclic or polycyclic carbocyclic aromatic rings. Representative examples are phenyl, naphthyl (e.g. naphth-1-yl, naphth-2-yl), anthryl (e.g. anthr-1-yl, anthr-9-yl), phenanthryl (e.g. phenanthr-1-yl, phenanthr-9-yl), and the like. Aryl is also intended to include monocyclic, bicyclic or polycyclic carbocyclic aromatic rings substituted with carbocyclic aromatic rings. Representative examples are biphenyl (e.g. biphenyl-2-yl, biphenyl-3-yl, biphenyl-4-yl), phenylnaphthyl (e.g.1-phenylnaphth-2-yl, 2-phenylnaphth-1-yl), and the like. Aryl is also intended to include partially saturated bicyclic or polycyclic carbocyclic rings with at least one unsaturated moiety (e.g. a benzo moiety). Representative examples are indanyl (e.g. indan-1-yl, indan-5-yl), indenyl (e.g. inden-1-yl, inden-5-yl), 1,2,3,4-tetrahydronaphthyl (e.g. 1,2,3,4-tetrahydronaphth-1-yl, 1,2,3,4-tetrahydronaphth-2-yl, 1,2,3,4-tetrahydronaphth-6-yl), 1,2-dihydronaphthyl (e.g. 1,2-dihydronaphth-1-yl, 1,2-dihydronaphth-4-yl, 1,2-dihydronaphth-6-yl), fluorenyl (e.g. fluoren-1-yl, fluoren-4-yl, fluoren-9-yl), and the like. Aryl is also intended to include partially saturated bicyclic or polycyclic carbocyclic aromatic rings containing one or two bridges. Representative examples are, benzonorbornyl (e.g. benzonorborn-3-yl, benzonorborn-6-yl), 1,4-ethano-1,2,3,4-tetrahydronapthyl (e.g. 1,4-ethano-1,2,3,4-tetrahydronapth-2-yl,1,4-ethano-1,2,3,4-tetrahydronapth-10-yl), and the like. Aryl is also intended to include partially saturated bicyclic or polycyclic carbocyclic aromatic rings containing one or more spiro atoms. Representative examples are spiro[cyclopentane-1,1'-indane]-4-yl, spiro[cyclopentane-1,1'-indene]-4-yl, spiro[piperidine-4,1'-indane]-1-yl, spiro[piperidine-3,2'-indane]-1-yl, spiro[piperidine-4,2'-indane]-1-yl, spiro[piperidine-4,1'-indane]-3'-yl, spiro[pyrrolidine-3,2'-indane]-1-yl, spiro[pyrrolidine-3,1'-(3',4'-dihydronaphthalene)]-1-yl, spiro[piperidine-3,1'-(3',4'-dihydronaphthalene)]-1-yl, spiro[piperidine-4,1'-(3',4'-dihydronaphthalene)]-1-yl, spiro[imidazolidine-4,2'-indane]-1-yl, spiro[piperidine-4,1'-indene]-1-yl, and the like. Aryl is also intended to include aromatic rings with 1 or more atoms other than carbon like pyridine, pyrazine, pyrazole, pyrrole, thiophene, furan, and derivatives thereof. In one aspect of the invention, aryl is phenyl.

Examples of substituents are alkyl groups (such as C₁₋₁₀-alkyl), aryl groups, CN, OH, OR¹, N, NH, NH₂, NHR¹, NR¹R², SH, SR¹, COOH, COOR¹, CONH₂, CONHR¹, CONR¹R², Cl, Br, F, SO₃, PO₄, where R¹ and R² independently are selected from the group consisting of alkyl (such as C₁₋₁₀-alkyl) and aryl groups (such as phenyl or anthracene). These groups may optionally be substituted with similar substituents.

The term "halogen" or "hallo" means fluorine, chlorine, bromine or iodine.

The term "triflate", more formally known as trifluoromethanesulfonate, is a functional group with the formula CF₃SO₃-.

The term "C₁₋₄-alkoxy group" as used herein refers to the radical C₁₋₄-alkyl-O-. Representative examples are methoxy, ethoxy, propoxy (e.g. 1-propoxy, 2-propoxy), butoxy (e.g. 1-butoxy, 2-butoxy, 2-methyl-2-propoxy), and the like.

The silanized silica gel can also be endcapped with an appropriate silane reagent. Examples of silane reagents for endcapping are trimethylchlorosilane, hexamethyldisilazane, and *N,O*-bis(trimethylsilyl)acetamide.

In one aspect of the invention, coatings are silyl coatings (e.i. silyl ligands) such as octadecyl dimethyl silyl (C18), octadecyl methyl silyl (C18), octyl dimethyl silyl (C8), butyl dimethyl silyl (C4), dibutyl silyl, dihydroxypropyl dimethyl silyl, cyanopropyl dimethyl silyl, phenyl dimethyl silyl, and aminopropyl dimethyl silyl groups; in a further aspect, coatings are polymer coatings such as molecular imprinted polymers; in a further aspect, coatings are made from cyclodextrines and derivatives thereof such as phenylcarbamated β-cyclodextrin; in a further aspect, the coating is a pegylated coating (such as polyethylene glycol and derivatives here of); and in yet a further aspect, coatings are made from cellulose and amylase, and derivatives thereof such as tris(3,5-dimethylphenyl)carbamoyl cellulose.

Coated silica gel material is often used in laboratorial and industrial production (fractionation) of numerous pharmaceutical compounds such as insulin, and other peptides and proteins, Cipralex and other small drug molecules or for the analysis of the purity of such molecules. During the use of a coated silica gel material, the material can loose some of or all of its chromatographic separation and/or adsorption capability. This may in some cases be due to irreversible adsorption of matter and/or contamination of the pores in the silica gel material with product such as a drug product and/or product related impurities and/or even impurities from the chromatographic process. The material may also lose some of or all of its chromatographic separation and/or adsorption capability due to loss of coating (such as ligands or a polymeric layer) and therefore lack of or lowering of the separation capability and/or adsorption capability of the coated silica gel material.

By the term "separation performance" in the present context is meant ability to separate the desired molecule from other molecules to the desired purity level. In one aspect of the invention, the separation performance of the re-coated silica gel material has been improved such that the re-coated silica gel has a higher separation performance than the silica gel material with the first coating entering the process according to the invention. In a further aspect of the invention, the separation performance is measured by separation of conventional organic test compounds such as e.g. pyridine, phenol, uracil, benzaldehyde, benzoenitrile, and anisole e.g. as described in example 2.

By the term "adsorption capacity" in the present context is meant amount of molecules that can be adsorped on the coated silica gel material before breakthrough happens or in a certain time period. In one aspect of the invention, the adsorption capacity has been improved such that the re-coated silica gel has a higher adsorption capacity than the silica gel material with the first coating entering the process according to the invention.

By the term "re-coated silica gel material" in the present context is meant a silica gel material which has been stripped of a coating and re-coated with the same type of coating or with a different type of coating by the process according to the invention, thus the first coating and the second coating may or may not be the same type of coating. In one aspect of the invention, the re-coated silica gel material has been coated with the same type of coating. In another aspect of the invention, the coated silica gel material to be re-coated according to the invention is a used or spent coated silica gel material. The coated silica gel material may have been used multiple times for e.g. liquid chromatography such as RP-HPLC.

In another aspect of the invention, the re-coated silica gel material of the process according to the invention has obtained a higher separation performance and/or adsorption capacity compared to the silica gel material with the first coating entering the process even though the first and the second coating are the same.

In one aspect of the invention, where the coated silica gel material entering the process according to the invention is a used or spent silica gel material with a first coating, the re-coated silica gel obtained by the process according to the invention with a second coating equal to the first coating has substantially the same or a higher separation performance and/or adsorption capacity compared to the coated silica gel material before it was used or spent. It is, thus, possible in this aspect by using the process according to the invention to obtain a material with the same or an even better separation performance and/or adsorption capacity than the original coated silica gel material and, thus, to avoid discarding used material. This may be beneficial both for environmental reasons and also for improving the economy in industrial processes.

In some cases the re-coated silica gel material may also have a higher mechanical strength than the coated silica gel material entering the process. This is e.g. the case when the coated silica gel material is a silanized silica gel as e.g. shown in example 3. The re-coated silica gel material may have an improved mechanical strength compared to the coated silica gel material undergoing the process according to the invention due to introduction of an extra layer of silicium dioxide thereby causing a smaller pore volume than the original silica gel. This is due to the fact that only the organic part of the silyl ligand is burned off by the heating step according to the invention leaving silicium atoms behind bound to the original silica gel material. Removal of less stable, broken particles from the coated material by fractionation after the heating step in the process according to the invention may also contribute to a higher mechanical stability of the re-coated material. Furthermore, as illustrated in example 9, even without fractionation and addition of an extra silicium layer, it is possible in some aspects of the invention to obtain an improved mechanical stability for the re-coated silica gel.

When the re-coated silica gel material has been coated with the same coating as the coated silica gel material entering the process according to the invention, i.e. the first coating and the second coating are of the same type, and this coating is a silyl ligand, the re-coated material is not necessarily the same material as entering the process due to the extra layer of silicium dioxide. However, if the coating on the silica gel material is purely organic or the covalent bond between the silica gel and the coating is a Si-C or Si-O-C bond, the re-coated silica gel material may be the same as the coated silica gel material entering the process according to the invention, if the silica gel material is re-coated with the same type of coating, but may have a better mechanical stability.

In the aspect where the first and the second coating are the same, the re-coated silica gel material is suitable for the same purposes as the coated silica gel entering the process according to the invention. In one aspect, re-coated silica gel material obtained by the process of this invention is suitable for liquid chromatography (LC). In a further aspect, the re-coated silica gel material obtained by the process of this invention is suitable for RP HPLC. In another aspect, the re-coated silica gel obtained by the process of this invention is suitable for chiral separation, and in yet another aspect the re-coated silica gel obtained by the process of this invention is suitable for ion exchange chromatography. In a further aspect, the re-coated material obtained by the process of this invention is suitable for affinity chromatography, and in yet a further aspect, the re-coated silica gel obtained by the process of this invention is suitable for SFC.

In one aspect, a re-coated silica gel material obtainable by the process according to the invention is provided. In a further aspect, the re-coated silica gel material obtainable by the process according to the invention is a silanized silica gel.

In a further aspect, a packing material for liquid chromatography obtainable by the process according to the invention is provided. In another aspect, a column for liquid chromatography packed with a packing material obtainable by the process according to the invention is provided. In yet a further aspect, a method of analysis of a compound wherein a column packed with a packing material obtainable by the process according to the invention is used is provided. In yet a further aspect, a method of fractionation of a compound wherein a column packed with a packing material obtainable by the process according to the invention is used is provided. In yet a further aspect, a method of analysis or fractionation wherein the compound is a peptide or a protein is provided. In yet a further aspect, a material for adsorption processes obtainable by the process according to the invention is provided. In yet a further aspect, a method of adsorption of a compound wherein a material obtainable by the process according to the invention is used is provided. The re-coated silica gel material obtainable by the process according to the invention can be applied where coated silica gel is normally used. In one aspect of the invention, removal of irreversibly bound organic compounds is obtained by the process of the invention.

In one aspect,a tube filled with re-coated material is provided. In a further aspect, a filter bed of re-coated material is provided. In yet a further aspect, any other means of applying the re-coated material in an adsorption process is provided.

The following is a more detailed description of each step of the present process, including optional steps, which are, however, not intended to limit the scope of the invention in any way.

### Heating step

In one aspect of the invention, the silica gel material with a first coating is heated in step a) to a temperature of about 50 to about 1000°C. In another aspect, the temperature during step a) at least reaches 500 °C. In another aspect, the temperature during step a) at least reaches 650 °C. In a further aspect, the temperature is from about 50 to about 900°C. In a further aspect, the temperature is from about 50 to about 800°C. Depending on several factors such as the specific coating on the silica gel material to be treated and any low boiling solvents present, the heating step may be carried out by raising the temperature in intervals and in the presence of e.g. an inert atmosphere or an oxidising gas.

In one aspect, the coated silica gel material is heated according to a temperature profile and for a certain time period in order to remove any low boiling solvents present and to combust any organic materials such as ligands and/or any adsorbed organic matter.

Examples of different ovens which can be used for this step are industrial pizza ovens, retort ovens, fluidized beds, and venting autoclaves, the industrial retort ovens being the most preferred.

The heating step may preferably be performed in a way that ensures a uniform heating of the coated silica gel material and at a temperature that is high enough to burn off all organic material without damaging the silica gel.

In one aspect of the invention, the heating in step a) is carried out by raising the temperature in one or more steps. In one aspect, the heating in step a) is carried out in a two-step process comprising a first step (a1) with heating at an initial temperature and a second step (a2) with heating at a higher temperature (combusting temperature) compared to the initial temperature. In one aspect, the initial temperature is a temperature of 50-200 °C, such as 50-150 °C or 80-150 °C. In another aspect, the combusting temperature is a temperature of 400-900 °C, such as 400-800 °C. In yet a further aspect, the combusting temperature is a temperature of 500-800 °C. In a further aspect, the initial temperature is a temperature of 50-150 °C followed by a combusting temperature of 500-800 °C. Both step (a1) and (a2) may be several individual steps where the material is kept at a certain temperature for a certain time period. The heating step a) of the process according to the invention may be performed by raising the temperature for a certain time period in several steps such as e.g. 7 steps, 8 steps, 9 steps or more. In one aspect of the invention, the initial heating (a1) may be performed in one or two steps. In a further aspect of the invention, the combusting heating (a2) may be performed in 2 to 15 steps, such as 3 to 10, e.g. 6 to 8 steps.

It is preferred to carry out step a) of the process according to the invention under an inert gas, or an oxidising gas depending on the volatility of the organic material.

In one aspect, the heating at the initial temperature is carried out under an inert gas. Examples of inert gasses are helium, neon, argon or nitrogen gas.

In one aspect, the heating at the combusting temperature is carried out under an inert gas followed by treatment under an oxidising gas. Examples of an oxidising gas are oxygen containing gas, hydrogen peroxide, air or ozone. In one aspect of the invention, the oxidising gas is selected from the group consisting of O₂ and air, and mixtures thereof with N₂. In a more preferred aspect, the heating at the combusting temperature is carried out under a mixture of nitrogen and oxygen or air or just air.

One example of temperature intervals according to the invention is a three step process comprising:
Step a1): Slow heating to 100-200 °C, preferably under nitrogen, to burn off organic solvents and water in one or more steps.
Step a2): Heating up to 800 °C, such as up to 650 °C, preferably under nitrogen, to burn off ligands and organic leftovers in one or more steps.
Step a3): Oxidation of carbon leftovers by heating up to 800 °C, such as up to 700°C under air or mixtures of air and inert gas in one or more steps.

As a more specific example, the heating step according to the invention can be achieved by placing the coated silica gel material in ceramic (e.g. Pillivuyt) trays in a layer of max. 10 cm, preferably less than 7 cm, and even more preferably 5 cm or less than 5 cm. The ceramic trays are placed in a retort oven e.g. from Gemco (Holland). The coated silica gel material may be slowly heated to max. 150 °C under nitrogen to burn off any water and low boiling organic solvents. This is followed by an increase in temperature to max. 700 °C under nitrogen or any other inert gas to burn off most of the organic material present. After several hours, the temperature is increased to max. 900 °C under oxidising conditions for several hours to burn off any remaining organic compounds. Hereafter, the pyrolysed silica gel material is left to cool down.

In one aspect of the invention, the initial heating is carried out for as long as it takes to achieve a temperature that is above the boiling point of the highest boiling liquid used with the material, e.g. 4-10 hours to obtain 150 °C or more specifically 6 hours to obtain a temperature of 100 °C. In a further aspect, the heating at the combusting temperature is carried out for 2-15 hours such as for 4-13 hours.

Before further treatment, the material is cooled e.g. to less than 50 °C.

### Optional step: Fractionation of the heat-treated material:

The silica gel material treated according to step a) of the invention is optionally fractionated to the appropriate particle size to remove broken particles or agglomerates. This can be perfomed using e.g. a hydrocyclone, an air classifier or other appropriate equipment. In a further aspect of the invention, the bulk part of the silica gel material from step a) is fractionated twice to remove smaller and bigger parts from the desired particle size.

### Treatment with an acidic solution:

The acidic treatment of the heat-treated material has several purposes depending on the state of the material entering the step. In one aspect of the invention, contacting the heat-treated silica gel material with the acidic solution removes any contaminating salts and/or iron flakes from the combusting oven.

The treatment with the acidic solution also hydrolyses any siloxane bridges obtained during the heating of the silica gel material. Hydrolysis of siloxane bridges generates silanol groups which may subsequently be derivatised with ligands during the re-coating step. If siloxane bridges are not hydrolysed before the bonding process, the bridges may be hydrolysed by e.g. water during use of the re-coated silica gel material and may give rise to the presence of silanol groups in the coated material. The latter can reduce the separation performance and/or adsorption capacity of the coated material.

In one aspect of the invention, the material obtained in step a) is brought in contact with an acidic solution. In a further aspect, the acidic solution in step b) has a pH lower than 5, preferably lower than 3, preferably lower than 2, and even more preferably lower than 1. In another aspect, the acidic solution of step b) has a pH of about 0 to about 5, preferably a pH of about 0 to about 4, preferably a pH of about 0 to about 3, even more preferably a pH of about 0 to about 2 and even more preferred a pH of about 0 to about 1. In one aspect of the invention, the amount of acidic solution compared to the amount of silica gel is 2 ml/g, preferably 3 ml/g, and even more preferably 4 ml/g or more. This is to ensure sufficient wetting of the gel.

Inorganic acids are obviously preferred for dissolving inorganic matter like heavy metals or metal salts. Although the use of organic acids can be envisaged for that purpose, they are in general less effective. In one aspect of the invention, the acidic solution in step b) is thus an aqueous solution of an inorganic acid.

Examples of inorganic acids are hydrochloric acid (HCl), nitric acid, perchloric acid, sulfuric acid (H₂SO₄) and phosphoric acid (H₃PO₄), or mixtures thereof. In one aspect of the invention, the acidic solution in step b) is an aqueous solution of an inorganic acid selected from the group consisting of HCl, H₂SO₄ and H₃PO₄. In a further aspect, the acidic solution is aqueous HCl. In one aspect, the aqueous HCl solution is 1-10 % w/w corresponding to 0.3-3.0 M.

The treatment with the acidic solution may be performed by simple contact e.g. in a reactor or by flushing the solution through a column or container packed with the silica gel, or under pressure in an autoclave.

The treatment with the acidic solution in a reactor or by flushing the solution through a column or container packed with the silica gel will typically be for a period of about 1-48 hours, more preferred for 1-24 hours and even more preferred for 1-12 hours.

The temperature can range between 0 and 100 °C, more preferably between room temperature (r.t.) and 100 °C, most preferably at a temperature above 70°C.

To exemplify this step, the heat-treated silica gel is treated under reflux with aqueous HCl under agitation for about 1-48 hours, more preferred for 1-24 hours and even more preferred for 1-12 hours.

### Optional step: Treatment with a neutral or an alkaline solution

In one aspect of the invention, the material obtained in step a) before treatment with the acidic solution in step b) is treated with a neutral or alkaline solution. In a further aspect of the invention, the material obtained in step a) before treatment with the acidic solution in step b) is treated with water at a temperature higher than 100 °C. In yet a further aspect of the invention, the material obtained in step a) before treatment with the acidic solution in step b), is treated with an alkaline solution having a pH higher than 7. In another aspect of the invention, the material obtained in step b) before coating in step c), is treated with a neutral or alkaline solution. In a further aspect of the invention, the material obtained in step b) before coating in step c) is treated with water at a temperature higher than 100 °C. In yet a further aspect of the invention, the material obtained in step b) before coating in step c) is treated with an alkaline solution having a pH higher than 7. In one aspect, the amount of neutral or alkaline solution compared to the amount of silica gel is 2 ml/g or more in order to ensure sufficient wetting. In a further aspect, the amount of neutral or alkaline solution compared to the amount of silica gel is 3 ml/g or more, and in yet a further aspect 4 ml/g or more.

The hydrolysis of siloxane bridges may be accomplished by treatment at neutral pH such as with water or with an alkaline solution either before or after treatment with the acidic solution. Another result of an optional treatment with an alkaline or neutral solution is a re-coated silica gel with larger pores (pore expansion). In some cases, large pores are beneficial e.g. for purification and/or adsorption of large molecules such as peptides or proteins.

In order to obtain a pore expansion with water, a preferred temperature is 100-400 °C, such as 200-300 °C, such as e.g. 240 °C. In one aspect, the amount of water compared to the amount of silica gel is 2 ml/g or more in order to ensure sufficient wetting. In a further aspect, the amount of water compared to the amount of silica gel is 3 ml/g or more, and in yet a further aspect 4 ml/g or more. In order to obtain a material with a narrow pore size distribution, a homogenous suspension has to be ensured. This can e.g. be obtained by rotation of an autoclave.

In one aspect of the invention, the pH of the alkaline solution is 7-14. In another aspect, the pH of the alkaline solution is 9-13, in a further aspect 10-12. In an aspect, the pH of the alkaline solution is 8-13 and in a further aspect 9-12 such as a pH of 9-11.

In one aspect, the pore expansion with base,is performed at a pH of the alkaline solution from pH 9-13, such as pH 10 -11. In another aspect, the pore expansion is performed at a pH of the alkaline solution from pH 8-13, such as pH 9 -11.

In one aspect of the invention, the alkaline solution is a solution of an inorganic or organic base. In one aspect of the invention, the alkaline solution is a solution of a base selected from the group consisting of inorganic bases and organic amines such as NaOH, NH₃, Na₂CO₃, NaHCO₃, H₂N-CH₂CH₂-OH, and (CH₃CH₂)₃N. In one aspect, the alkaline solution is a solution of an organic base in water at pH 8-13, such as pH 8-10. In a further aspect of the invention, the organic base is selected from the group consisting of ethanolamine and triethylamine. In another aspect of the invention, the alkaline solution is a solution of an inorganic base. In a further aspect of the invention, the alkaline solution is a solution of an inorganic base selected from the group consisting of NaOH, Na₂CO₃ and NaHCO₃. In yet another aspect of the invention, the alkaline solution is a solution of an inorganic base selected from the group consisting of NaOH and Na₂CO₃ (such as in an amount of 0.4-5 % w/w).

The optional treatment with a neutral or an alkaline solution may be performed by simple contact with the alkaline solution e.g. by stirring in a reactor or by flushing the solution through a column or container packed with the silica gel, or by simple contact with water or an alkaline solution under pressure in an autoclave.

### Re-coating of the treated silica gel material:

The heat- and acid-treated silica is re-coated with the same type of coating as the silica gel entering the process or a new type of coating. The coating of the silica gel material with a coating of silyl ligands may be performed by any process known to the skilled person in the art where key issues are removal of water before addition of e.g. a chloro- , triflate- or alkoxysilane, reaction with the chloro- , triflate- or alkoxysilane in an organic solvent, and recovery of the silanized silica gel as e.g. described by Y. Sudo in J. Chromatography A 737, p. 139-147 (1996).

In one aspect of the invention, the silanization is performed by dehydration by azeotropic distillation in an organic solvent followed by silanization with the appropriate silane compound to give the re-coated material. Any solvent may be used which does not react with the silane compound and is stable at the reaction temperature such as e.g. toluene, dichloromethane, xylene or other hydrophobic organic solvents. In one aspect of the invention, the solvent is toluene. A basic compound such as pyridine or imidazole may be added to the reaction system. After several hours of reaction time, an end-capping reagent, such as trimethylchloro silane, may be added. When the reaction is completed, destruction of excess reagent(s) is accomplished by addition of an alcohol. The mixture is left to cool down and the silanized material is collected by e.g. filtration or centrifugation.

### EXEMPLARY EMBODIMENTS

In an aspect of the invention, a process for the preparation of a re-coated silica gel material from a silica gel material coated with a first coating comprising the steps of:
a) heating the silica gel material coated with a first coating to at least a temperature of 500 °C e.g. under an oxidising gas,
b) treating the material obtained in step a) with an acidic solution having a pH lower than 1, and
c) coating the material obtained in step b) with a second coating is provided.

In a further aspect of the invention, a process for the preparation of a re-coated silica gel material from a silica gel material coated with a first coating which material has been used for liquid chromatography comprising the steps of:
a) heating the silica gel material coated with a first coating at least to a temperature of 500 °C e.g. under an oxidising gas,
b) treating the material obtained in step a) with an acidic solution having a pH lower than 1, and
c) coating the material obtained in step b) with a second coating is provided.

In a further aspect of the invention, a process for the preparation of a re-coated silica gel material from a silanized silica gel material having been used for liquid chromatography comprising the steps of:
a) heating the silica gel material coated with a first coating at least to a temperature of 500 °C e.g. under an oxidising gas,
b) treating the material obtained in step a) with an acidic solution having a pH lower than 1, and
c) coating the material obtained in step b) with a second coating is provided.

In a further aspect of the invention, a process for the preparation of a re-coated silica gel material from a silanized silica gel material having been used for liquid chromatography comprising the steps of:
a) heating the silica gel material coated with a first coating at least to a temperature of 500 °C e.g. under an oxidising gas,
b) treating the material obtained in step a) with an acidic solution wherein the amount of acidic solution compared to the amount of silica gel is 2 ml/g, preferably 3 ml/g, and even more preferably 4 ml/g or more said solution having a pH lower than 1, and
c) coating the material obtained in step b) with a second coating, is provided.

### FURTHER EXEMPLARY EMBODIMENTS

The following paragraphs describe exemplary embodiments of the invention.
1. A process for the preparation of a re-coated silica gel material from a silica gel material coated with a first coating comprising the steps of:
   a) heating the silica gel material coated with a first coating at a temperature from 50 °C to 1000 °C,
   b) treating the material obtained in step a) with an acidic solution having a pH lower than 7, and
   c) coating the material obtained in step b) with a second coating.
2. The process according to embodiment 1, wherein the material obtained in step a) before treatment with the acidic solution in step b), is treated with water at a temperature higher than 100 °C.
3. The process according to embodiment 1, wherein the material obtained in step a) before treatment with the acidic solution in step b), is treated with an alkaline solution having a pH higher than 7.
4. The process according to any one of the embodiments 1-3, wherein the material obtained in step b) before coating in step c) is treated with water at a temperature higher than 100 °C.
5. The process according to any one of the embodiments 1-3, wherein the material obtained in step b) before coating in step c) is treated with an alkaline solution having a pH higher than 7.
6. The process according to any one of the embodiments 1-5, wherein the acidic solution in step b) has a pH lower than 5, preferably lower than 3, preferable lower than 2 and even more preferable lower than 1.
7. The process according to any one of the embodiments 1-6, wherein the acidic solution in step b) is an aqueous solution of an inorganic acid.
8. The process according to any one of the embodiments 1-7, wherein the acidic solution in step b) is an aqueous solution of an inorganic acid selected from the group consisting of HCl, H₂SO₄ and H₃PO₄.
9. The process according to any one of the embodiments 1-8, wherein the alkaline solution is a solution of an inorganic or organic base.
10. The process according to embodiment 9, wherein the pH of the alkaline solution is 7-14, more preferable 9-13, and even more preferable 10-12.
11. The process according to any one of the embodiments 1-10, wherein the temperature in step a) is from 50 °C to 900 °C.
12. The process according to embodiment 11, wherein the heating in step a) is carried out by raising the temperature in one or more steps.
13. The process according to embodiment 12, wherein the heating in step a) is carried out in a two-step process comprising a first step (a1) with heating at an initial temperature and a second step (a2) with heating at a higher combusting temperature.
14. The process according to embodiment 13, wherein the initial temperature is a temperature of 50-200 °C.
15. The process according to embodiment 13, wherein the combusting temperature is a temperature of 500-800 °C.
16. The process according to embodiment 15, wherein the initial temperature is a temperature of 50-150 °C followed by a combusting temperature of 500-800 °C.
17. The process according to any one of the embodiments 14-16, wherein the heating at the initial temperature is carried out under an inert gas.
18. The process according to any one of the embodiments 13-17, wherein the heating at the combusting temperature is carried out under an inert gas followed by treatment under an oxidising gas.
19. The process according to embodiment 18, wherein the oxidising gas is selected from the group consisting of O₂ and air, and mixtures thereof with N₂.
20. The process according to any one of the preceding embodiments, wherein the material obtained in step a) is fractionated for particle size before treatment with an acidic solution in step b).
21. The process according to any one of the preceding embodiments, wherein the re-coated silica gel material is suitable for HPLC and adsorption processes.
22. The process according to any one of the preceding embodiments, wherein the silica gel material coated with a first coating is a silanized silica gel.
23. The process according to any one of the preceding embodiments, wherein the second coating is the same type of coating as the first coating.
24. The process according to any one of the preceding embodiments, wherein the silica gel material with the first coating has been in use.
25. The process according to any one of the preceding embodiments, wherein the re-coated silica gel material has a higher mechanical strength than the silica gel material with the first coating entering the process.

The features disclosed in the foregoing description may, both separately and in any combination thereof, be material for realizing the invention in diverse forms thereof.

All headings and sub-headings are used herein for convenience only and should not be construed as limiting the invention in any way.

Any combination of the above-described elements in all possible variations thereof is encompassed by the invention unless otherwise indicated herein or otherwise clearly contradicted by context.

The terms "a" and "an" and "the" and similar referents as used in the context of describing the invention are to be construed to cover both the singular and the plural, unless otherwise indicated herein or clearly contradicted by context.

Recitation of ranges of values herein are merely intended to serve as a shorthand method of referring individually to each separate value falling within the range, unless otherwise indicated herein, and each separate value is incorporated into the specification as if it were individually recited herein. Unless otherwise stated, all exact values provided herein are representative of corresponding approximate values (e.g., all exact exemplary values provided with respect to a particular factor or measurement can be considered to also provide a corresponding approximate measurement, modified by "about," where appropriate).

All methods described herein can be performed in any suitable order unless otherwise indicated herein or otherwise clearly contradicted by context.

The use of any and all examples, or exemplary language (e.g., "such as") provided herein, is intended merely to better illuminate the invention and does not pose a limitation on the scope of the invention unless otherwise indicated. No language in the specification should be construed as indicating any element is essential to the practice of the invention unless as much is explicitly stated.

The description herein of any aspect or embodiment of the invention using terms such as "comprising", "having", "including" or "containing" with reference to an element or elements is intended to provide support for a similar aspect or embodiment of the invention that "consists of", "consists essentially of", or "substantially comprises" that particular element or elements, unless otherwise stated or clearly contradicted by context (e.g., a formulation described herein as comprising a particular element should be understood as also describing a formulation consisting of that element, unless otherwise stated or clearly contradicted by context).

This invention includes all modifications and equivalents of the subject matter recited in the aspects or claims presented herein to the maximum extent permitted by applicable law.

The present invention is further illustrated in the following representative examples which are, however, not intended to limit the scope of the invention in any way.

### EXAMPLES

In the examples below, the following equipment was used for standard analytical analyses:
N₂ adsorption/desorption: Autosorb-3B from Quantachrome.
Chromatographic analysis : A HPLC system comprising a P580 Pump, a PDA-100 Photodiode Array Detector, an ASI-100 Automated Sampler Injector, a Degasys DG-2410 degasser, and a Column Oven TCC-3000 from Dionex or an Äkta*explorer* 10A from GE Healthcare.
ICP analysis: Performed by Teknologisk Institut (Taastrup,Gregersensvej, 2630 Taastrup, Denmark).
Carbon analysis: Performed at Copenhagen University, Denmark.
Determination of colour coordinates: Minolta Chromameter CR-300, in the following CR-300.

### Example 1

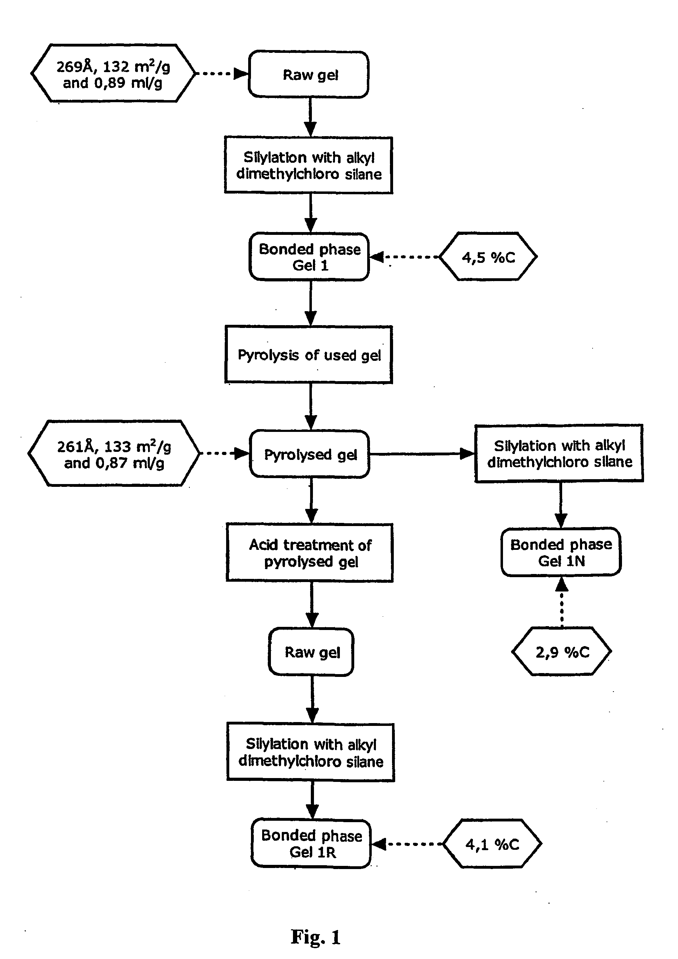

A flowchart of example 1 is shown in fig.1.

### 1.a. Packing and testing of coated silica gel

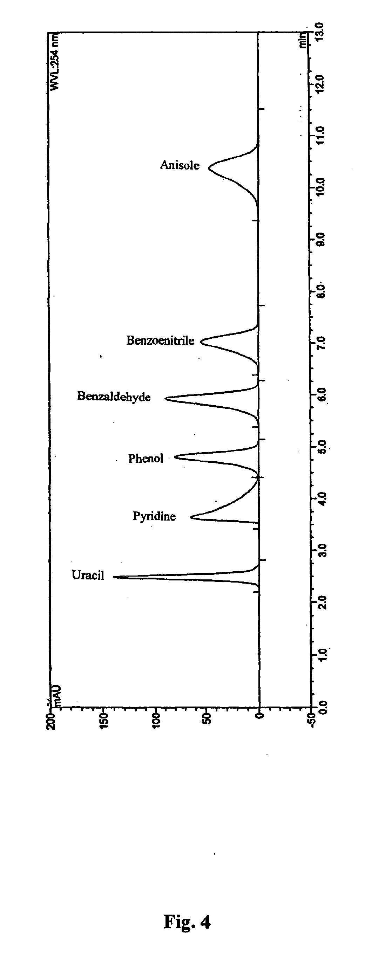

A large portion of a raw silica gel (300Å, 15 µm) was purchased from a commercial manufacturer from Japan and coated with (3,3-dimethyl)butyl-dimethylchloro-silane according to standard silanization procedures (to give an RP HPLC silica gel). A portion of the coated gel (Gel1) was slurry packed in a 4x250 mm steel column and tested for its chromatographic performance (see example 2). The result is shown in fig. 4.

### 1.b. Use and testing of used coated silica gel

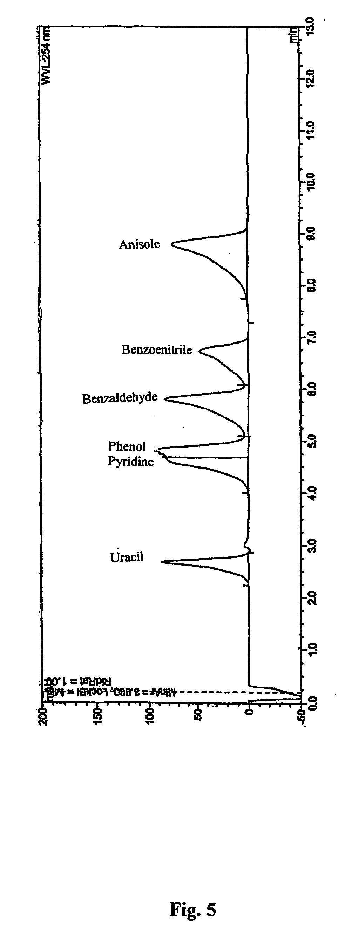

The main portion of the coated silica gel was used in an industrial process for purifying a peptide. A portion of the used silica gel was tested again for its chromatographic performance. The result is shown in fig. 5. As seen in fig. 5, the coated silica gel has lost some of its chromatographic separation capability.

The gel was then treated as described below.

### 1.c. Pyrolysis of ligands and organic leftovers

The wet, used RP HPLC silica gel (300Å, 15 µm, DMBDMS) was transferred to several ceramic open containers in a 5 cm thick layer. The containers were placed in a retort oven and are heated according to the conditions given below:

| | |
|---|---|
| Step 1: | Heating to 100 °C under nitrogen (12 m³/hr). |
| Step 2.1: | Heating to 400 °C under nitrogen (12 m³/hr) for 300 minutes. |
| Step 2.2: | Heating to 500 °C under nitrogen (12 m³/hr) for 120 minutes. |
| Step 2.3: | Heating to 630 °C under nitrogen (12 m³/hr) for 120 minutes. |
| Step 3.1: | Heating at 630 °C under nitrogen/air (each 6 m³/hr) for 90 minutes. |
| Step 3.2: | Heating at 630 °C under air (12 m³/hr) for 90 minutes. |
| Step 3.3: | Heating at 690 °C under air (12 m³/hr) for 480 minutes. |

The oven was left to cool down. When the temperature had fallen below 50 °C the material was emptied out of the oven.

### 1.d. Fractionation of pyrolysed material

The pyrolysed material was transferred to an air classifier and fractionated to remove any bigger particles (possible e.g. agglomerated particles). The portion containing the main portion of particles (i.e. the smaller particles) were placed in the air classifier and fractionated again to remove the smallest particles (e.g. fragments from broken particles).

### 1.e. Acid treatment

After fractionation, the pyrolysed material was refluxed under stirring with aqueous hydrochloric acid (10 % w/w, pH 0, 4 L/kg gel) for 6 hours. The acid-treated material was filtered off and washed with water until neutral pH (approximately 0.7 L/kg gel).

### 1.f. Re-silanization

The acid-treated silica gel was dehydrated by azeotrope distillation in toluene (5-7 kg/kg gel). The suspension was cooled to 105 °C and imidazole (0.1-0.2 kg/kg gel) was added followed by (3,3-dimethyl)butyl dimethyl chlorosilane (purchased from Gelest Inc., 0.3-0.5 kg/kg gel). The suspension was stirred under reflux for 4 hours. The bonded material was end-capped by addition of N,O-bis(trimethylsilyl) acetamide (purchased from Gelest Inc., 0.1 kg/kg gel). Stirring was continued for another 2 hours. After stirring the suspension was cooled to 70 °C. Ethanol (0.8-1.2 kg/kg gel) was added. The suspension then was filtered and washed with ethanol (1-8 kg/kg gel) to obtain the re-coated silica gel Gel 1R.

### 1.g. Testing of re-coated silica gel and comparison to a re-coated silica gel which has not been acid-treated.

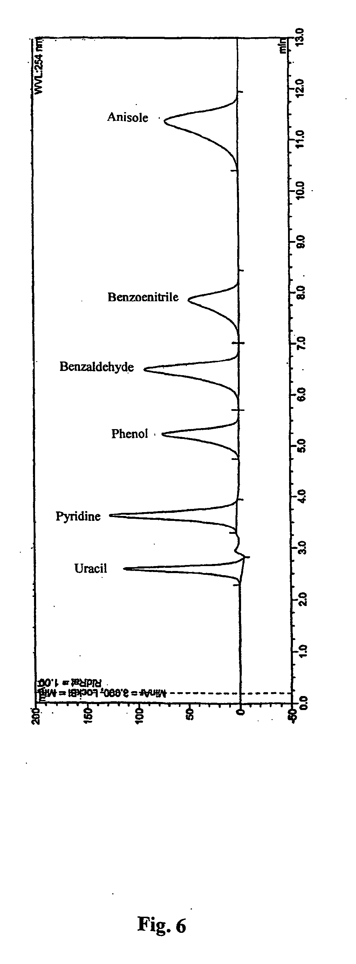

The re-coated silica gel "Gel 1R" obtained in 1.f. was slurry packed in a 4x250 mm steel column and tested for its chromatographic performance (see example 2). The result is shown in fig. 6.

As can be seen from the chromatograms in fig. 4-6, the re-coated silica gel regains its chromatographic performance when treated according to the invention.

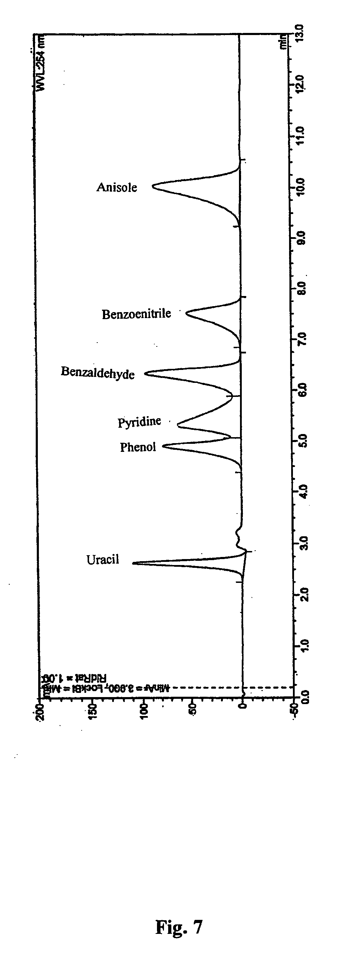

A coated silica gel was treated as described above with the exception of the acid treatment, and a re-coated silica gel "Gel 1N" was obtained for comparison. The re-coated silica gel "Gel 1N" was slurry packed in a 4x250 mm steel column and tested for its chromatographic performance. The result is shown in fig. 7.

From the difference between the chromatogram in fig. 6 and fig. 7 it can be seen that only when the material is treated with acid before re-coating, the chromatographic performance is fully regained (gel 1R). This is believed to be due to removal of any salt leftovers and to the hydrolysis of the siloxane bridges before coating. In "gel 1N" siloxane bridges hydrolyse after coating, thus, generating silanol groups which are responsible for the change in retention time of pyridine and, thus poorer separation of the critical pair pyridine/phenol compared to "gel 1R".

Details of the gels before and after use and re-coating are shown in Table 1.

**Table 1. Pore size, pore volume and specific surface area determined by nitrogen adsorption/desorption for the raw gels and the carbon content of the bonded phases before and after use (gel 1) and recoating (gel 1R). For comparison, the carbon content for the gel (gel 1N) made without acid treatment is also shown.**

| **Gel** | | **Acid treatment** | **Pore volume (Å)** | **Pore volume (ml/g)** | **Surface area (m2/g)** | **%C*** |
|---|---|---|---|---|---|---|
| Gel 1 | Before use | Yes | 269 | 0,89 | 132 | 4,5 |
| | After use | | | | | 3,6 |
| Gel 1R | Before use | Yes | 261 | 0,87 | 133 | 4,1 |
| Gel 1N | Before use | No | | | | 2,9 |

### Example 2

Testing of separation performance was performed with 4,0x250 mm columns with a flow rate of 1.0 ml/min. A test mixture of uracil (0.02 mg/ml), phenol (0.35 mg/ml), pyridine (0.06 mg/ml), anisole (0.7 mg/ml), benzaldehyde (0.025 mg/ml) and benzoenitrile (0.4 mg/ml) in acetonitrile-water (1:1) is prepared. The column is equilibrated with 30 % aq. acetonitrile at 40 ± 2 °C for 30 minutes where after 10 µl of the test mixture is injected. Elution is performed with the equilibration mixture at 40 ± 2 °C. The UV-signal is measured at 254 nm. The results are shown in figure 4-7.

### Example 3

Testing of mechanical strength of a used gel Gel 1 and a re-coated gel Gel 1R (prepared as described in example 1) by packing the gel material in a DAC column (5 cm ID) to a bed height of 2-4 cm with a packing pressure of 150 bar. A flow profile is run (10 CV at each flow rate) up to 100 ml/min with a piston pressure of 150 bar using 20 % ethanol as solvent. The back pressure at each flow rate is measured. The piston pressure is then removed and reapplied after 1-2 minutes. 1 CV of solvent is applied and again the piston pressure is removed and reapplied for 1-2 minutes. This is repeated another 4 times whereafter a new flow profile is performed. This procedure is then repeated another 5 times (to a total of 6 flow profiles). The difference in back pressure at 100 ml/min in profile 1 and 6 correlates to mechanical stability of the silica gel material. The smaller the difference, the more mechanically stable the silica gel material is.

**Table 2. Mechanical test results. Pₓ is the back pressure (excl. system pressure) at 100 ml/min in flow profile X.**

| **Gel** | **Mechanical test (bar)** | | |
|---|---|---|---|
| | **P₁** | **P₆** | **P₆-P₁** |
| **Gel 1** | **23** | **63** | **40** |
| **Gel 1R** | **8** | **24** | **16** |

The decrease in pressure difference between profile 1 and 6 for the material obtained according to the invention (Gel 1R) compared with the original material (Gel 1), clearly indicates the improved mechanical strength of the re-coated material.

### Example 4

In order to obtain a pore expansion of a silica gel, the following may be performed: A batch reaction of 80 g (1 kg silica gel/3 L alkaline solution) heat treated silica gel (Gel 2, obtained by the method described in example 1.c) is gently stirred at 50 °C for 6 hours in aqueous Na₂CO₃ (0.05 g/L water). After reaction, the silica gel (Gel 3) is filtered off, washed with water and dried at 150 °C overnight. The pore size before (Gel 2) and after pore expansion (Gel 3) was measured by nitrogen adsorption/desorption. Results are shown in the table below.

**Table 3. N₂ desorption/adsorption results of the pyrolysed, and the pyrolysed, base treated silica gels.**

| **Gel** | **Pore size (Å)** | **Pore volume (ml/g)** | **Surface area (m2/g)** |
|---|---|---|---|
| Gel 2 | 134 | 1,02 | 304 |
| Gel 3 | 184 | 0,84 | 182 |

### Example 5

### 5.a.1 Pyrolysis of ligands and organic leftovers

Approximately 100 g of wet used RP HPLC silica gel (200Å, 15 µm, ODDMS, sample 5.a) was transferred to a ceramic open container in a 2 cm thick layer. The container was placed in a retort oven and was heated according to the conditions given below:

| | |
|---|---|
| Step 1: | Heating at 70 °C over night in the presence of air. |
| Step 2.1: | Heating to 100 °C for 60 minutes, and maintaining the temperature for 60 minutes in the presence of air. |
| Step 2.2: | Heating to 400 °C for 60 minutes, and maintaining the temperature for 240 minutes in the presence of air. |

The oven was left to cool down. When the temperature had fallen below 50 °C, the material was emptied out of the oven. The top layer of the pyrolysed gel had a dark brown colour. The product was mixed to give a gel with a brown colour. A sample was taken (sample 5.a.1) for carbon analysis and determination of colour coordinates (using a Minolta Chromameter CR-300).

### 5.a.2.Pyrolysis of ligands and organic leftovers

Approximately 100 g of wet, used RP HPLC silica gel (200Å, 15 µm, ODDMS, sample 5.a) was transferred to a ceramic open container in a 2 cm thick layer. The container was placed in a retort oven which was heated according to the conditions given below:

| | |
|---|---|
| Step 1: | Heating at 70 °C over night in the presence of air. |
| Step 2.1: | Heating to 100 °C for 60 minutes, and maintaining the temperature for 60 minutes in the presence of air. |
| Step 2.2: | Heating to 400 °C for 60 minutes, and maintaining the temperature for 240 minutes in the presence of air. |
| Step 2.3: | Heating to 500 °C for 30 minutes, and maintaining the temperature for 60 minutes in the presence of air. |

The oven was left to cool down. When the temperature had fallen below 50 °C, the material was emptied out of the oven. A sample was taken (sample 5.a.2) for carbon analysis and determination of colour coordinates.

### 5.a.3. Pyrolysis of ligands and organic leftovers

Approximately 200 g of wet, used RP HPLC silica gel (200Å, 15 µm, ODDMS, sample 5.a) was transferred to a ceramic open container in a 2 cm thick layer. The container was placed in a retort oven which was heated according to the conditions given below:

| | |
|---|---|
| Step 1: | Heating at 70 °C over night in the presence of air. |
| Step 2.1: | Heating to 100 °C for 60 minutes, and maintaining the temperature for 60 minutes in the presence of air. |
| Step 2.2: | Heating to 400 °C for 60 minutes, and maintaining the temperature for 240 minutes in the presence of air. |
| Step 2.3: | Heating to 500 °C for 30 minutes, and maintaining the temperature for 60 minutes in the presence of air. |
| Step 2.4: | Heating to 650 °C for 60 minutes, and maintaining the temperature for 240 minutes in the presence of air. |
| Step 2.5: | Heating to 690 °C for 60 minutes, and maintaining the temperature for 420 minutes in the presence of air. |

The oven was left to cool down. When the temperature had fallen below 50 °C the material was emptied out of the oven. A sample was taken (sample 5.a.3) for carbon analysis and determination of colour coordinates.

### 5.b. Acid treatment

Each of the pyrolysed materials were treated with aqueous hydrochloric acid, 10 % w/w as described in example 1.e.

The acid-treated gels were dried over night in an oven at 110 °C. Samples were taken for N₂ adsorption/desorption (in the following BET) and ICP analysis (samples 5.b.1, 5.b.2, and 5.b.3).

### 5.c. Re-silanization

Each of the acid-treated silica gels were re-silanized as described in example 1.f, replacing (3,3-dimethyl)butyl dimethyl chlorosilane with octadecyl dimethylchlorosilane (70 % in toluene, purchased from Gelest Inc., approx. 1 g/g gel). The re-coated silica gels were dried over night at 70 °C. Samples were taken for carbon analysis (samples 5.c.1, 5.c.2, and 5.c.3).

The analysis results are shown in the table below:

**Table 4. Results obtained by carbon analysis, N₂ adsorption/desorption, deterimination of colour coordinates, and ICP for the new (un-used), used, pyrolysed, acid-treated, and re-coated materials.**

| Test | Gel type and sample no. | | | | | | | | | | |
|---|---|---|---|---|---|---|---|---|---|---|---|
| | New | Used | Pyrolysed at | | | Acid-treated | | | Re-coated | | |
| | | | 400 °C | 500 °C | 690 °C | | | | | | |
| | 5 | 5. a | 5. a.1 | 5. a.2 | 5. a.3 | 5. b.1 | 5. b.2 | 5. b.3 | 5. c.1 | 5. c.2 | 5. c.3 |
| **Carbon** | | | | | | | | | | | |
| %C | 14.3 | 13.6 | 0.6 | 0.1 | 0.0 | - | - | - | 13.2 | 13.9 | 12.8 |

| **Nitrogen adsorp/ desorp** | | | | | | | | | | | |
|---|---|---|---|---|---|---|---|---|---|---|---|
| Pore size (Å) | 208 | - | 196 | - | 201 | 203 | 191 | 200 | - | - | - |
| Surface area (m2/g) | 199 | - | 207 | - | 185 | 191 | 226 | 209 | - | - | - |
| Pore volume (ml/g) | 1.04 | - | 1.01 | - | 0.93 | 0.97 | 1.08 | 1.04 | - | - | - |

| **CR-300** | | | | | | | | | | | |
|---|---|---|---|---|---|---|---|---|---|---|---|
| L | 2.3 | - | -35.1 | 0.2 | 0.6 | - | - | - | - | - | - |
| a | -0.1 | - | 6.4 | -0.6 | 0.0 | - | - | - | - | - | - |
| b | -5.9 | - | 10.3 | -3.7 | -6.4 | - | - | - | - | - | - |

| **ICP** | | | | | | | | | | | |
|---|---|---|---|---|---|---|---|---|---|---|---|
| Al | <22 | <22 | <22 | <22 | <22 | <22 | <22 | <22 | - | - | - |
| K | <10 | 83 | 58 | 120 | 90 | 17 | 15 | 42 | - | - | - |
| Na | <2 | 110 | 94 | 48 | 74 | 69 | <2 | 56 | - | - | - |

The example shows that the metal content introduced during use of the gel (sample 5) is reduced by the acid treatment (samples 5.b.1, 5.b.2, and 5.b.3).

The example also shows that a re-coated silica gel with the same colour coordinates as the original gel may be obtained when the temperature reaches a temperature of minimum 500 °C during pyrolysis in the presence of air. Likewise, to obtain a re-coated silica gel with approximately the same carbon content as the original gel (comparison of sample 5 with samples 5.c.1, 5.c.2, and 5.c.3), a temperature of a minimum of 500 °C in the presence of air has to be reached during pyrolysis. The lower carbon content of sample 5.c.3 compared to sample 5.c.2 is probably attributed to an insufficient silanization process.

### Example 6

Silica gel (100g, 300Å, 15 µm) was suspended in toluene (600 ml) in a 3 necked round bottomed flask. The gel was dehydrated by azeotropic distillation in toluene (600 ml). Imidazole (13.5 g) was added, and the flask removed from the heat. Dimethyloctadecyl(3-trimethoxysilylpropyl)ammonium chloride (199,3 g) was carefully added, and heating was resumed. Methanol was distilled off as it was formed. After removal of 75 ml methanol, the suspension was left for cooling. When the temperature had fallen below 60 °C, the gel was collected by filtration, and washed with ethanol (1 L). The wet gel was resuspended in 70 % v/v (600 ml) and heated to 60 °C under stirring for 30 minutes. The gel was filtered of again, washed with ethanol (1 L) and dried over night at 70 °C. Carbon analysis was performed on sample 6.1.

The coated silica gel based anion exchanger (gel 6.1 from above) was pyrolysed as described in example 5.a.3.

The pyrolysed material was acid-treated as described in example 1.e. The acid-treated gel was dried over night in an oven at 110 °C.

The acid-treated silica gel was silanized to the corresponding anion exchanger as above. Carbon analysis was performed on sample 6.2.

**Table 5.**

| **Sample no.** | **%C** | **%H** | **%N** |
|---|---|---|---|
| 6.1 | 5.0 | 1.0 | 0.3 |
| 6.2 | 4.5 | 0.7 | 0.2 |

A chromatographic analysis was performed by packing the gels in 4 mm x 250 mm steel columns, and performing an anion exchange chromatographic procedure using an Äkta *explorer*10A. As test material, an insulin solution consisting of insulin (20 mg/ml) in aqueous formic acid (0,05 w/w %) was applied. Elution was performed by gradient elution with aqueous buffers consisting of 0,24 % w/w TRIS, 1,25 % w/w NH₄Ac, and 42,5 % w/w EtOH, pH 7,5 (adjusted with AcOH), and 13,9 % w/w NaAc, 0,3 % w/w AcOH, and 42,5 % w/w EtOH, respectively. Prior to application, the columns were equilibrated with a solution consisting of 0.24 % w/w TRIS, 0.25 % w/w NH₄Ac, and 42.5 % w/w EtOH, pH 7.5 (adjusted with AcOH). A flow rate of 1 ml/min was used.

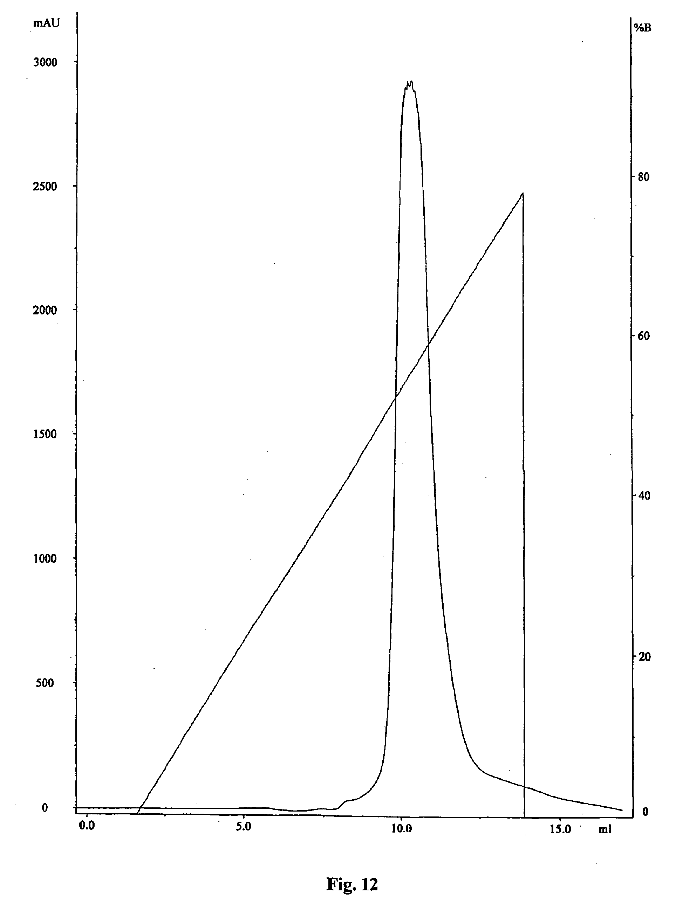

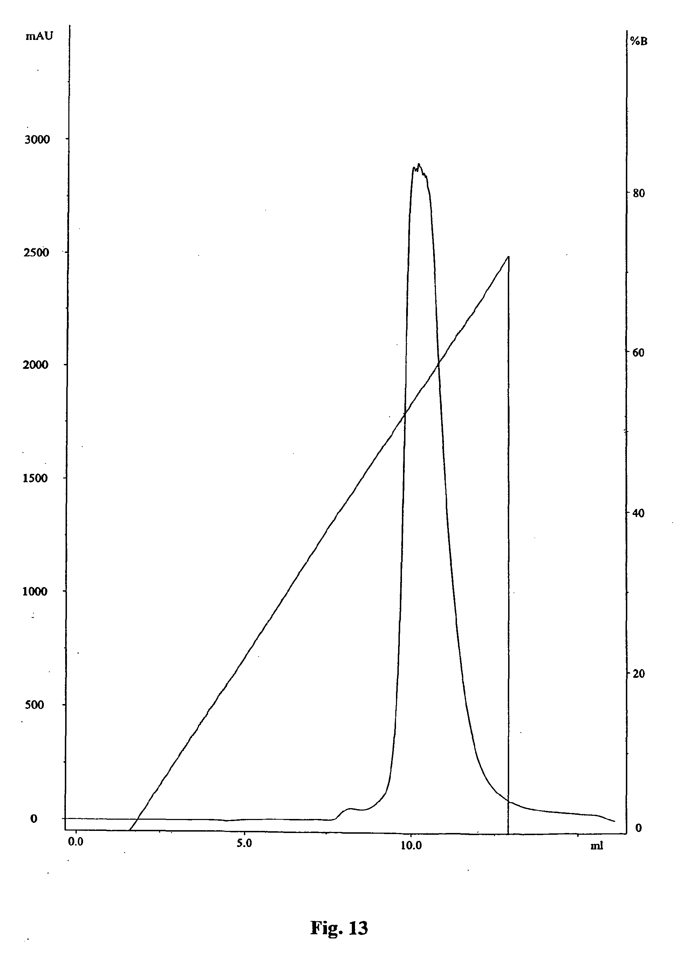

The chromatograms of the unused silica based anion exchanger, and the re-coated version of it, are shown in fig. 12 and 13, respectively.

The example shows re-coating of a silica based anion exchanger.

### Example 7:

### Re-coating of a re-coated gel:

Approximately 400 g of wet, used RP HPLC silica gel (300Å, 15 µm, C4) was re-coated to the corresponding C18 phase according to the invention as described in example 5 (step 5.a.3, 5.b, and 5.c). A sample was taken (sample 7.1) for carbon analysis.

The re-coated gel (375 g, 300Å, 15 µm, C18) was once more treated according to the invention (see above) to give the corresponding twice re-coated C18 silica gel. A sample was taken (sample 7.2) for carbon analysis.

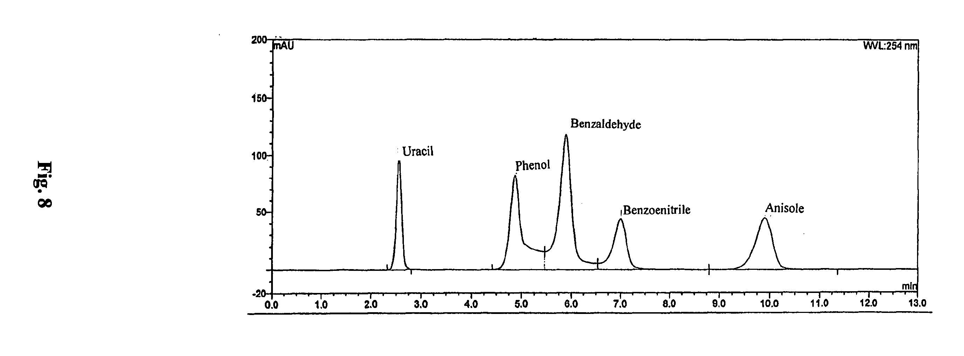

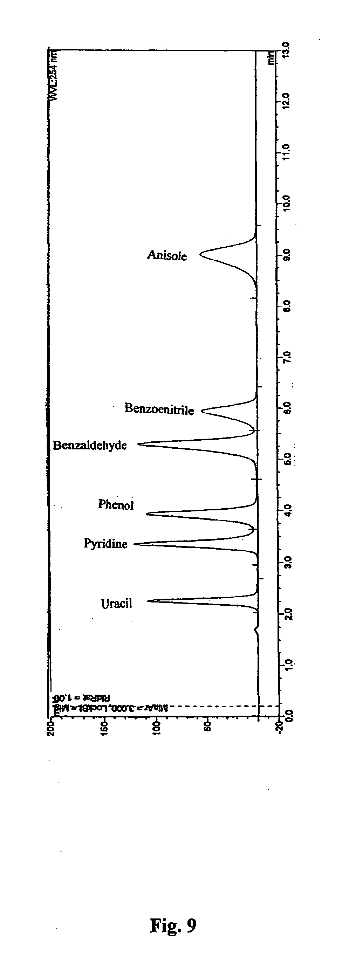

The twice re-coated gel (313 g, 300Å, 15 µm, C18) was treated once more according to the invention (see above) to give the corresponding triple re-coated C18 silica gel. A sample was taken (sample 7.3) for carbon analysis. A 4.6 mm x 250 mm column was packed with the triple re-coated C18 silica gel for chromatographic analysis (see fig. 9) and compared with the original, un-used C4 gel (see fig. 8).

The carbon analysis results are shown in the table below.

**Table 6. Carbon analysis results of the starting material, the re-coated gel, the twice re-coated gel, and the triple re-coated gel.**

| **Sample no.** | **No. of re-coating** | **%C** |
|---|---|---|
| 7.0 | 0 | 4.3 |
| 7.1 | 1 | 9.0 |
| 7.2 | 2 | 9.0 |
| 7.3 | 3 | 8.6 |

The chromatographic tests of the triple re-coated (fig. 9) and the un-used (fig. 8) gels show that it is possible to perform the process of the invention several consecutive times without losing chromatographic performance.

### Example 8

The same experiment as above in example 9 was performed with a C18, 100Å silica gel as the starting material.

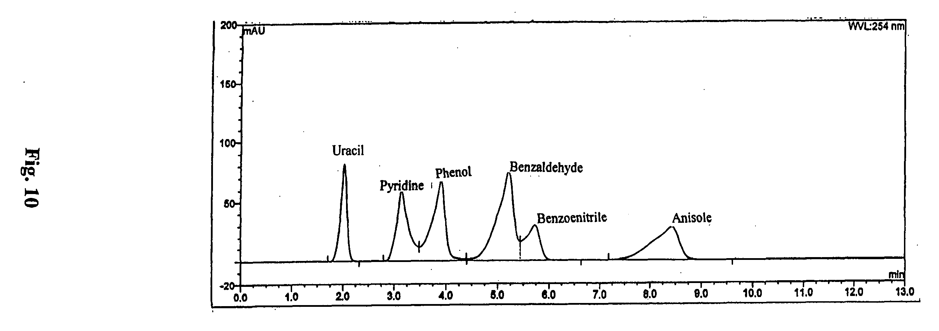

The results are shown in table 7 and figures 10-11.

**Table 7. Carbon analysis results of the starting material, the re-coated gel, the twice re-coated gel, and the triple re-coated gel.**

| **Sample no.** | **No. of re-coating** | **%C** |
|---|---|---|
| 8.0 | 0 | 18.3 |
| 8.1 | 1 | 17.1 |
| 8.2 | 2 | 16.3 |
| 8.3 | 3 | 15.3 |

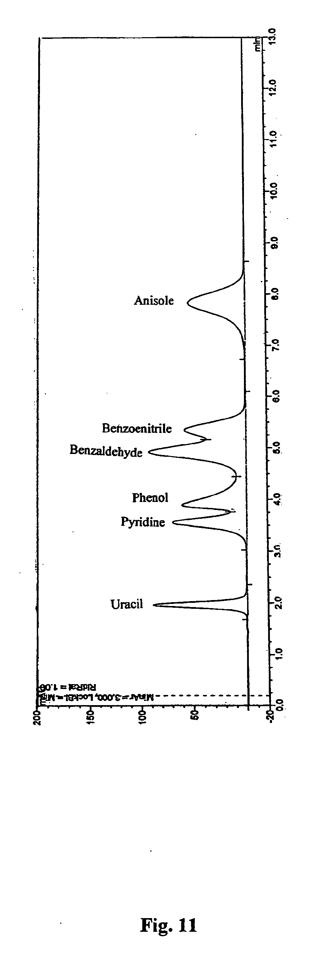

The chromatographic tests of the triple re-coated (fig. 11) and the un-used gels (fig. 10) show that it is possible to perform the process of the invention several consecutive times without losing chromatographic performance. However, a decrease in carbon content is seen due to the reduced surface area caused by the extra silicium layer introduced by each re-coating process.

### Example 9

An uncoated silica gel (300Å, 15 µm) was purchased from a commercial manufacturer from Japan.

A portion of the gel was silanized as described in example 1.a . Prior to silanization, a sample was taken for N₂ adsorption/desorption, and after silanization, a sample was taken for carbon analysis of the coated gel (sample 9.1).

A portion of gel 9.1 was subjected to re-coating according to the invention as described in example 5. A sample was taken for N₂ adsorption/desorption after the pyrolysis and another sample was taken for carbon analysis of the re-coated gel (sample 9.2).

Another portion of the uncoated silica gel (symbolising silica gel coated with other coatings than silyl ligands) was also subjected to re-coating according to the invention. A sample was taken for N₂ adsorption/desorption after the pyrolysis and another sample was taken for carbon analysis of the re-coated gel (sample 9.3).

The results of the N₂ adsorption/desorption analyses along with the carbon analysis results from the corresponding coated gels are shown in table 8.

**Table 8. Pore size, pore volume and specific surface area determined by nitrogen adsorption/desorption for the raw gels and the carbon content of the bonded phases before and after use (gel 1) and recoating (gel 1R). For comparison, the carbon content for the gel (gel 1N) made without acid treatment is also shown.**

| Gel | Pore size (Å) | Pore volume (ml/g) | Surface area (m2/g) | Ligand | %C |
|---|---|---|---|---|---|
| 9.1 | 270 | 0,88 | 130 | C4 | 4.2 |
| 9.2 | 271 | 0.83 | 122 | C18 | 9.0 |
| 9.3 | 271 | 0.87 | 129 | C18 | 9.2 |

Furthermore, all three gels were subjected to mechanical testing as described in example 3. Results are shown in table 9.

**Table 9. Mechanical test results. Pₓ is the back pressure (excl. system pressure) at 100 ml/min in flow profile X.**

| | Mechanical test (bar) | | |
|---|---|---|---|
| Gel | P1 | P6 | P6-P1 |
| 9.1 | 21 | 65 | 44 |
| 9.2 | 12 | 24 | 12 |
| 9.3 | 13 | 33 | 20 |

The decrease in pressure difference between profile 1 and 6 for the materials obtained according to the invention compared with the original material, clearly indicates the improved mechanical strength of the re-coated materials. When the original material was coated with a silyl ligand (sample 9.2), the re-coated material has an even greater improved mechanical stability than the re-coated material with no extra silicium layer introduced (sample 9.3). See fig. 3 for illustration of the meaning of an extra silicum layer when re-coating a silanized silica gel with a new (or the same) silyl ligand.

## Claims

1. A process for the preparation of a re-coated silica gel material from a silica gel material coated with a first coating comprising the steps of:
a) heating the silica gel material coated with a first coating at a temperature from 50 °C to 1000 °C,
b) treating the material obtained in step a) with an acidic solution having a pH lower than 5, and
c) coating the material obtained in step b) with a second coating.

2. The process according to claim 1, wherein the material obtained in step a) before treatment with the acidic solution in step b), is treated with a neutral or alkaline solution.

3. The process according to claim 2, wherein the material obtained in step a) before treatment with the acidic solution in step b), is treated with water at a temperature higher than 100 °C.

4. The process according to claim 2, wherein the material obtained in step a) before treatment with the acidic solution in step b), is treated with an alkaline solution having a pH higher than 7.

5. The process according to any one of the claims 1-4, wherein the material obtained in step b) before coating in step c), is treated with a neutral or alkaline solution.

6. The process according to claim 5, wherein the material obtained in step b) before coating in step c), is treated with water at a temperature higher than 100 °C.

7. The process according to claim 5, wherein the material obtained in step b) before coating in step c) is treated with an alkaline solution having a pH higher than 7.

8. The process according to any one of the claims 1-7, wherein the acidic solution in step b) has a pH lower than 3.

9. The process according to any one of the claims 1-8, wherein the amount of acidic solution in step b) compared to the amount of silica gel is 4 ml/g or more.

10. The process according to any one of the claims 1-9, wherein the acidic solution in step b) is an aqueous solution of an inorganic acid.

11. The process according to any one of the claims 1-10, wherein the acidic solution in step b) is an aqueous solution of an inorganic acid selected from the group consisting of HCl, H₂SO₄ and H₃PO₄.

12. The process according to any one of the claims 2, 4, 5 and 7, wherein the alkaline solution is a solution of an inorganic or organic base.

13. The process according to claim 12, wherein the pH of the alkaline solution is 8-13.

14. The process according to any one of the claims 1-13, wherein the temperature in step a) is from 50 °C to 900 °C.

15. The process according to any one of the claims 1-14, wherein the temperature in step a) at least reaches 500 °C.

16. The process according to any one of the claims 1-15, wherein the heating in step a) is carried out by raising the temperature in one or more steps.

17. The process according to claim 16, wherein the heating in step a) is carried out in a two-step process comprising a first step (a1) with heating at an initial temperature and a second step (a2) with heating at a higher combusting temperature.

18. The process according to claim 17, wherein the initial temperature is a temperature of 50-200 °C.

19. The process according to claim 17 or 18, wherein the combusting temperature is a temperature of 500-800 °C.

20. The process according to claim 17, wherein the initial temperature is a temperature of 50-150 °C followed by a combusting temperature of 500-800 °C.

21. The process according to any one of the claims 17-20, wherein the heating at the initial temperature is carried out under an inert gas.

22. The process according to any one of the claims 17-21, wherein the heating at the combusting temperature is carried out under an inert gas followed by treatment under an oxidising gas.

23. The process according to claim 22, wherein the oxidising gas is selected from the group consisting of O₂ and air, and mixtures thereof with N₂.

24. The process according to any one of the preceding claims, wherein the material obtained in step a) is fractionated for particle size before treatment with an acidic solution in step b).

25. The process according to any one of the preceding claims, wherein the silica gel material coated with a first coating is a silanized silica gel.

26. The process according to any one of the preceding claims, wherein the second coating is the same type of coating as the first coating.

27. The process according to any one of the preceding claims, wherein the silica gel material with the first coating has been used for liquid chromatography.

## Patentansprüche

1. Verfahren zur Herstellung eines erneut beschichteten Silicagelmaterials aus einem mit einer ersten Beschichtung beschichteten Silicagelmaterial, umfassend die Schritte:
a) Erwärmen des mit einer ersten Beschichtung beschichteten Silicagelmaterials bei einer Temperatur von 50°C bis 1000°C,
b) Behandeln des in Schritt a) erhaltenen Materials mit einer Säurelösung mit einem pH-Wert unter 5 und
c) Beschichten des in Schritt b) erhaltenen Materials mit einer zweiten Beschichtung.

2. Verfahren nach Anspruch 1, wobei das in Schritt a) erhaltene Material vor der Behandlung mit der Säurelösung in Schritt b) mit einer neutralen oder alkalischen Lösung behandelt wird.

3. Verfahren nach Anspruch 2, wobei das in Schritt a) erhaltene Material vor der Behandlung mit der Säurelösung in Schritt b) mit Wasser bei einer Temperatur über 100°C behandelt wird.

4. Verfahren nach Anspruch 2, wobei das in Schritt a) erhaltene Material vor der Behandlung mit der Säurelösung in Schritt b) mit einer alkalischen Lösung mit einem pH-Wert über 7 behandelt wird.

5. Verfahren nach einem der Ansprüche 1-4, wobei das in Schritt b) erhaltene Material vor der Beschichtung in Schritt c) mit einer neutralen oder alkalischen Lösung behandelt wird.

6. Verfahren nach Anspruch 5, wobei das in Schritt b) erhaltene Material vor der Beschichtung in Schritt c) mit Wasser bei einer Temperatur über 100°C behandelt wird.

7. Verfahren nach Anspruch 5, wobei das in Schritt b) erhaltene Material vor der Beschichtung in Schritt c) mit einer alkalischen Lösung mit einem pH-Wert über 7 behandelt wird.

8. Verfahren nach einem der Ansprüche 1-7, wobei die Säurelösung in Schritt b) einen pH-Wert unter 3 aufweist.

9. Verfahren nach einem der Ansprüche 1-8, wobei die Menge der Säurelösung in Schritt b) verglichen mit der Menge an Silicagel 4 ml/g oder mehr beträgt.

10. Verfahren nach einem der Ansprüche 1-9, wobei die Säurelösung in Schritt b) eine wässrige Lösung einer anorganischen Säure ist.

11. Verfahren nach einem der Ansprüche 1-10, wobei die Säurelösung in Schritt b) eine wässrige Lösung einer anorganischen Säure ist, die ausgewählt ist aus der Gruppe, bestehend aus HCl, H₂SO₄ und H₃PO₄.

12. Verfahren nach einem der Ansprüche 2, 4, 5 und 7, wobei die alkalische Lösung eine Lösung einer anorganischen oder organischen Base ist.

13. Verfahren nach Anspruch 12, wobei der pH-Wert der alkalischen Lösung 8-13 beträgt.

14. Verfahren nach einem der Ansprüche 1-13, wobei die Temperatur in Schritt a) 50°C bis 900°C beträgt.

15. Verfahren nach einem der Ansprüche 1-14, wobei die Temperatur in Schritt a) mindestens 500°C erreicht.

16. Verfahren nach einem der Ansprüche 1-15, wobei das Erwärmen in Schritt a) durch Erhöhen der Temperatur in einer oder mehreren Stufen durchgeführt wird.

17. Verfahren nach Anspruch 16, wobei das Erwärmen in Schritt a) in einem zweistufigen Verfahren durchgeführt wird, das eine erste Stufe (a1), bei welcher bei einer anfänglichen Temperatur erwärmt wird, und eine zweite Stufe (a2), bei welcher bei einer höheren Verbrennungstemperatur erwärmt wird, umfasst.

18. Verfahren nach Anspruch 17, wobei die anfängliche Temperatur eine Temperatur von 50-200°C ist.

19. Verfahren nach Anspruch 17 oder 18, wobei die Verbrennungstemperatur eine Temperatur von 500-800°C ist.

20. Verfahren nach Anspruch 17, wobei die anfängliche Temperatur eine Temperatur von 50-150°C ist, gefolgt von einer Verbrennungstemperatur von 500-800°C.

21. Verfahren nach einem der Ansprüche 17-20, wobei das Erwärmen bei der anfänglichen Temperatur unter einem Inertgas durchgeführt wird

22. Verfahren nach einem der Ansprüche 17-21, wobei das Erwärmen bei der Verbrennungstemperatur unter einem Inertgas, gefolgt von der Behandlung unter einem oxidierenden Gas, durchgeführt wird.

23. Verfahren nach Anspruch 22, wobei das oxidierende Gas ausgewählt ist aus der Gruppe, bestehend aus O₂ und Luft und einem Gemisch davon mit N₂.

24. Verfahren nach einem der vorangehenden Ansprüche, wobei das in Schritt a) erhaltene Material vor der Behandlung mit einer Säurelösung in Schritt b) auf Teilchengröße fraktioniert wird.

25. Verfahren nach einem der vorangehenden Ansprüche, wobei das mit einer ersten Beschichtung beschichtete Silicagelmaterial ein silanisiertes Silicagel ist.

26. Verfahren nach einem der vorangehenden Ansprüche, wobei die zweite Beschichtung vom selben Beschichtungstyp wie die erste Beschichtung ist.

27. Verfahren nach einem der vorangehenden Ansprüche, wobei das Silicagelmaterial mit der ersten Beschichtung zur Flüssigchromatografie verwendet worden ist.

## Revendications

1. Un processus de préparation d'un matériau de gel de silice revêtu à nouveau à partir d'un matériau de gel de silice revêtu avec un premier revêtement, comprenant les étapes suivantes :
a) chauffage du matériau de gel de silice revêtu avec un premier revêtement à une température de 50°C à 1000°C,
b) traitement du matériau obtenu à l'étape a) avec une solution acide présentant un pH inférieur à 5, et
c) revêtement du matériau obtenu à l'étape b) avec un second revêtement.

2. Le processus de la revendication 1, dans lequel le matériau obtenu à l'étape a) avant le traitement avec la solution acide à l'étape b) est traité avec une solution neutre ou alcaline.

3. Le processus de la revendication 2, dans lequel le matériau obtenu à l'étape a) avant le traitement avec la solution acide à l'étape b) est traité avec de l'eau à une température supérieure à 100°C.

4. Le processus de la revendication 2, dans lequel le matériau obtenu à l'étape a) avant le traitement avec la solution acide à l'étape b) est traité avec une solution alcaline présentant un pH supérieur à 7.

5. Le processus de l'une des revendications 1 à 4, dans lequel le matériau obtenu à l'étape b) avant le revêtement à l'étape c) est traité avec une solution neutre ou alcaline.

6. Le processus de la revendication 5, dans lequel le matériau obtenu à l'étape b) avant le revêtement à l'étape c) est traité avec de l'eau à une température supérieure à 100°C.

7. Le processus de la revendication 5, dans lequel le matériau obtenu à l'étape b) avant le revêtement à l'étape c) est traité avec une solution alcaline présentant un pH supérieur à 7.

8. Le processus de l'une des revendications 1 à 7, dans lequel la solution acide à l'étape b) présente un pH inférieur à 3.

9. Le processus de l'une des revendications 1 à 8, dans lequel la quantité de solution acide à l'étape b) par rapport à la quantité de gel de silice est de 4 ml/g ou plus.

10. Le processus de l'une des revendications 1 à 9, dans lequel la solution acide à l'étape b) est une solution aqueuse d'un acide minéral.

11. Le processus de l'une des revendications 1 à 10, dans lequel la solution acide à l'étape b) est une solution aqueuse d'un acide minéral choisi dans le groupe consistant en HCl, H₂SO₄ et H₃PO₄.

12. Le processus de l'une des revendications 2, 4, 5 et 7, dans lequel la solution alcaline est une solution d'une base minérale ou organique.

13. Le processus de la revendication 12, dans lequel le pH de la solution alcaline est de 8 à 13.

14. Le processus de l'une des revendications 1 à 13, dans lequel la température à l'étape a) est comprise entre 50°C et 900°C.

15. Le processus de l'une des revendications 1 à 14, dans lequel la température à l'étape a) atteint au moins 500°C.

16. Le processus de l'une des revendications 1 à 15, dans lequel le chauffage à l'étape a) est exécuté par élévation de la température en une ou plusieurs étapes.

17. Le processus de la revendication 16, dans lequel le chauffage à l'étape a) est exécuté en un processus à deux étapes comprenant une première étape (a1) avec chauffage à une température initiale et une seconde étape (a2) avec chauffage à une température de combustion supérieure.

18. Le processus de la revendication 17, dans lequel la température initiale est une température de 50 à 200°C.

19. Le processus de la revendication 17 ou 18, dans lequel la température de combustion est une température de 500 à 800°C.

20. Le processus de la revendication 17, dans lequel la température initiale est une température de 50 à 150°C suivie par une température de combustion de 500 à 800°C.

21. Le processus de l'une des revendications 17 à 20, dans lequel le chauffage à la température initiale est effectué sous un gaz inerte.

22. Le processus de l'une des revendications 17 à 21, dans lequel le chauffage à la température de combustion est exécuté sous un gaz inerte suivi par un traitement sous un gaz oxydant.

23. Le processus de la revendication 22, dans lequel le gaz oxydant est choisi dans le groupe consistant en O₂ et l'air, et les mélanges de ceux-ci avec N₂.

24. Le processus de l'une des revendications précédentes, dans lequel le matériau obtenu à l'étape a) est fractionné avec la taille de particule avant traitement par une solution acide à l'étape b).

25. Le processus de l'une des revendications précédentes, dans lequel le matériau de gel de silice revêtu avec un premier revêtement est un gel de silice silanisé.

26. Le processus de l'une des revendications précédentes, dans lequel le second revêtement est le même type de revêtement que le premier revêtement.

27. Le processus de l'une des revendications précédentes, dans lequel le matériau de gel de silice avec le premier revêtement a été utilisé pour de la chromatographie en phase liquide.
